# EUROPEAN PATENT APPLICATION

(11) **EP 4 553 018 A1**
(43) Date of publication of application: **14.05.2025**
(21) Application number: 23208540.7
(22) Date of filing: 08.11.2023
(51) Int. Cl.: B65G 54/02, B60L 13/03, H02K 41/02

(54) **A METHOD FOR MANUFACTURING A TRACK MODULE FOR A LINEAR MOTOR CONVEYING SYSTEM, TRACK MODULE AND LINEAR MOTOR CONVEYING SYSTEM**

(71) Applicant: Robert Bosch GmbH, 70442 Stuttgart (DE)
(72) Inventor: Van Der Woude, Lars, 5644 EA Eindhoven (NL); Tielen, Niels, 4871 LM Etten-Leur (NL); Peters, Piet, 5731 EN Mierlo (NL); Aarden, Walter, 4891 ZJ Rijsbergen (NL); Jacobs, Roy, 5685 DV Best (NL)

(57) **Abstract**

The invention relates to a method for manufacturing a track module (402b) for a linear motor conveying system, comprising: Providing, for a given geometry of the track module, at least two track frame segments, at least two motor and/or sensor unit segments (401.1, 402.1, 402.2, 402.3), and guide rails; Combining the at least two track frame segments with each other, to form a track module frame; Providing, in the track module frame, grooves for the guide rails; Inserting the guide rails into the grooves; Mounting the at least two motor and/or sensor unit segments into the track module frame, to form the track module. The invention also relates to a track module.

## Description

The present invention relates to a method for manufacturing a track module for a linear motor conveying system, to a track module and to a linear motor conveying system for, e.g., carrying a payload. The linear motor conveying system comprises one or more track modules and one or more carrier modules to be guided in the one or more track modules.

### Background of the invention

Linear conveying systems like linear motor conveying systems can be used in different applications, e.g., industrial applications. For example, linear motor conveying systems can be used in the field of high-speed conveyance solutions for in-machine and inter-machine transportation. Such solutions can be inverted linear motor systems, which can control small workpiece carriers accurately and with high movement dynamics. The carriers themselves can be passive.

### Disclosure of the invention

According to the invention, a method for manufacturing a track module, a track module and a linear motor conveying system with the features of the independent claims are proposed. Advantageous embodiments are subject-matter of dependent claims and of the following description.

The invention relates to linear motor conveying systems and track modules used therein. Such a linear motor conveying system comprises one or more track modules and one or more carrier modules to be guided in the one or more track modules. The track modules can be standardized modules, several of such modules can be connected to each other to form a track system. A track module has or defines at least one conveying path, i.e., a path along which the carrier modules are to be guided and moved. Such track modules can be of different types, e.g., straight modules, curve modules, and switch modules. Such different modules in required numbers can be connected to form a track system according to specific needs. While straight modules and curve modules typically have one conveying path, a switch module can have a conveying path split into two conveying paths. A carrier module received in such track module can then be moved along such conveying path in a conveying direction. With a typical arrangement of such track modules at the ground, the conveying direction is horizontally oriented.

An embodiment of the invention relates to a method for manufacturing a track module for a linear motor conveying system. For a given geometry of the track module, at least two track frame segments, at least two motor and/or sensor unit segments, and guide rails are provided. Such given geometry can be, for example, for a certain type of track module, e.g., a straight or curve module. In other words, depending on the needs of a customer, a certain geometry can be required, the given geometry. Whereas for straight modules, these can be required in different lengths, for curve modules, these can be required in different curvatures, e.g., 45°, 90° 135° or 180°. It is noted, however, that different curvatures can also require different lengths.

The at least two track frame segments are combined with each other, to form a track module frame. This combining can comprise, for example, aligning the at least two frame segments, e.g., by means of dowel pins, and then connecting them using bolts or the like. Other ways of combining are possible, however.

In a next step, in the track module frame, grooves for the guide rails are provided. This can be done via milling the grooves in the frame or its material, for example. The number of guide rails depends on the type of carrier modules used. If a carrier module having six wheels, three per side, six guide rails, three per side, will be required. Accordingly, six grooves will have to be provide. In particular, the guide rails have a length corresponding to a length of the track module at the respective side of the track module where the guide rails are to be inserted. Thus, for a straight module, the guide rails all will have the same length. For a curve module, the length and also curvature will depend on the side of the track on which they are to be inserted. However, in any case the guide rail will cover the length of the at least two frame segments, i.e., each guide rail will span at least one junction between frame segments.

Then, the guide rails are inserted into the grooves. This can be done via clamping and/or gluing or other ways of fixing, like seaming, for example. Then, the at least two motor and/or sensor unit segments are into the track module frame, to form the track module. It is noted that the motor and/or sensor unit segments can be segments comprising the motor unit and the sensor unit, or the motor and/or sensor unit segments can be individual segments, i.e., motor segments and separate sensor segments. In the latter case, there will be at least two motor unit segments, and at least one sensor unit segments. Basically, within a sensor segment, there can be a PCB (e.g., at the bottom) that includes all of the sensors (e.g., in two rows). Each of these boards can be designed to match the motor units (for modularity).

This allows a modular and quick manufacturing of track modules. It is noted that a track module, in such case can not only be of a simple straight or curved type, but also of a more complex type, e.g., having one or more straight parts and one or more curved parts. This will depend on the length and curvature of the guide rails. Preferably, however, the guide rail is only continuous within a curved track module, in order to prevent misalignments and discontinuities in the guide rail (i.e., the transition or gap between the segments).

In addition, this modular way of manufacturing allows to provide the track frame segments in lengths and curvatures appropriate for the frame, and the motor and/or sensor unit segments in in lengths and curvatures appropriate for the motor and/or sensor units.

In an embodiment, the least two track frame segments are selected from a set of track frame segments such that the selected at least two track frame segments can be combined to form the given geometry of the track module. The set of track frame segments comprises different types of track frame segments. In particular, the different types of track frame segments comprise at least two of the following types of track frame segments: straight track frame segments of one or more different, pre-defined lengths; and curved track frame segments of one or more different, pre-defined curvatures. For example, three different lengths can be provided, 125mm, 250mm, and 750mm.

In an embodiment the least two motor and/or sensor unit segments are selected from a set of motor and/or sensor unit segments such that the selected at least two motor and/or sensor unit segments can be combined to form the given geometry of the track module, wherein the set of motor and/or sensor unit segments comprises different types of motor and/or sensor unit segments. In particular, the different types of motor and/or sensor unit segments comprise at least two of the following types of motor and/or sensor unit segments: straight motor and/or sensor unit segments of one or more different, pre-defined lengths; and curved motor and/or sensor unit segments of one or more different, pre-defined curvatures. Such curvatures can have a constant or a non-constant radius. For example, three different curvatures can be provided, 45° of constant radius, and 22,5°, -22,5° of non-constant radius. It is noted that with a non-constant radius, 22,5° and -22,5 are not equal to each other; these can be, for example, mirrored. Also, it is noted that the non-constant radius segment can form transition between a straight segment and a constant radius segment. It is noted that other curvatures or angles can be chosen.

In an embodiment, the track frame segments and the motor and/or sensor unit segments are configured such that in a track module, lengths and/or curvatures of the track frame segments and the motor and/or sensor unit segments correspond to each other. In another embodiment, the track frame segments and the motor and/or sensor unit segments are configured such that in a track module, lengths and/or curvatures of the track frame segments and the motor and/or sensor unit segments do not correspond to each other. In other words, junction lines between two segments can correspond to each other (or overlap) for the frame segments on the one hand and motor/sensor segments on the other hand, or not correspond to each other (or overlap).

Another embodiment of the invention relates to track module for a linear motor conveying system, comprising: at least two track frame segments, at least two motor and/or sensor unit segments, and guide rails. The at least two track frame segments are combined with each other, so as to form a track module frame; the guide rails are inserted into grooves provided in the track module frame; and the at least two motor and/or sensor unit segments are mounted in the track module frame. Such track module can, in particular, be obtained by means of the method described above.

Another embodiment of the invention relates to a linear motor conveying system, comprising one or more track modules, and one or more carrier modules to be received and guided in the one or more track modules. In order to connect several track modules to each other, appropriate connection means like screws or form fittings can be provided for mechanical connection. Also, other ways of combining or connecting can be used. Also, electrical connection of the electro-magnetic motor components should be provided.

Such carrier module, in an embodiment, comprises a carrier component and at least two wheels. Typically, a carrier has more wheels, e.g., four or six. The wheels can be (rotatably) mounted on respective legs of the carrier component, for example, i.e. such that a rolling motion of the wheel is possible. The carrier module is configured to be received between a first side component and a second side component of a track module. At least a first one of the two wheels and at least a second one of the two wheels are arranged at the carrier component opposite to each other, such that the at least one first wheel faces the first side component and the at least one second wheel faces the second side component, each with one or more guide rails, when received in the track module. In particular, the wheels contact a respective guide rail of the respective first or second side part, when the carrier module is received in the track module. As will be explained later, a carrier module can comprise four or six wheels, with two or three per side.

In an embodiment, said carrier module further comprises two counterpart electro-magnetic motor units or motor components. A first one of the two counterpart electro-magnetic motor components and a second one of the two counterpart electro-magnetic motor components are arranged at the carrier component opposite to each other, such that the first counterpart electro-magnetic motor component faces a first electro-magnetic motor component of the track module and the second counterpart electro-magnetic motor component faces a second electro-magnetic motor component of the track module, when received in the track module. This allows electro-magnetic conveying of the carrier module.

In an embodiment, said one or each of said more track modules comprises a track component, and at least two, or four or six, bearing surfaces, one, two or three per side. Said track component comprises, along at least part of a conveying path, the first side part, the second side part and a bottom part, wherein the first side part and the second side part are arranged opposite to each other. The first ones of the bearing surfaces are arranged at the first side part, and the second ones of the bearing surfaces are arranged at the second side part, such that the first bearing surfaces and the second bearing surface face each other. The track module can be configured such that the at least one first bearing surface matches with at least a first wheel of the carrier module, and that the at least one second bearing surface matches with at least a second wheel of the carrier module.

In an embodiment, the linear motor conveying system further comprises a controlling system for controlling the linear motor conveying system to move the one or each of the more carrier modules within the one or more track modules. This can comprise controlling (and powering) the electro-magnetic motor components, e.g., the coils, of the track modules in appropriate way.

The track module allows receiving a state of levitation of the carrier module between the two side parts of the track module.. Switches (i.e., track modules of switch type) can be taken easily, other than with track modules providing guidance from one side only, for example This also enables high speed curves. Having guidance only from one side, for example, would result in limited speed in curves, due to the centrifugal force which acts upon the carrier module while moving through a curve.

As mentioned above, such track module comprises motor units (formed from the at least two motor unit segments) , e.g., electro-magnetic motor components, each preferably comprising one or more electric coils. A first one of the two electro-magnetic motor components is arranged at the first side part, and a second one of the two electro-magnetic motor components is arranged at the second side part, such that the first electro-magnetic motor component and the second electro-magnetic motor component face each other. Preferably, the track module is configured such that the first electro-magnetic motor component matches with a first counterpart electro-magnetic motor component, preferably comprising one or more permanent magnets, of the carrier module, and that the second electro-magnetic motor component matches with a second counterpart electro-magnetic motor component, preferably comprising one or more permanent magnets, of the carrier module.

Having guidance only from one side, for example, would require one-sided motor components. Due to the attraction force between the magnets and coils, if the carrier module was only powered on one side, there is quite some pressure on the wheels. This means that the wheels (for example, made of plastic) would wear down relatively fast.

Another shortcoming of having guidance on one side only that is overcome, is that the carrier module was only held to the system by the attraction force of the magnets to the coils. This not only leads to problems in the curve, but also to a limited load which can be transported. Furthermore, the centre of mass of the load needed to be above the carrier module as much as possible. These problems do not or by far less occur with the system provided within the present invention.

In an embodiment, the first electro-magnetic motor component is fixed to the first side part by means of gluing and/or screwing, and/or the second electro-magnetic motor component is fixed to the second side part by means of gluing and/or screwing. This allows simple, fast and safe fixation.

In an embodiment, the track component (i.e., the first and second side part and the bottom part) is formed in one piece. This allows easy processing and manufacturing. In embodiment, the track component is made of aluminum, preferably extruded aluminum. This allows easy processing and manufacturing; in addition, aluminium allows a lightweight. It is noted that the track component can have a structure with struts or the like, further reducing the weight and improving stability.

Further advantages and embodiments of the invention result from the description and the attached drawing.

It goes without saying that the features mentioned above and those still to be explained below can be used not only in the combination specified in each case, but also in other combinations or on their own, without departing from the scope of the present invention.

The invention is shown schematically in the drawing using an exemplary embodiment and is described in detail below with reference to the drawing.

### Brief description of the drawing

- Fig. 1: shows a linear motor conveying system in a perspective view;
- Fig. 2: shows a switch type tack module in a perspective view;
- Fig. 3a: shows a track module and a carrier module in a perspective view;
- Fig. 3b: shows the track module and the carrier module of Fig. 3a in a cross section;
- Fig. 3c: shows the carrier module of Fig. 3a in a perspective view;
- Fig. 4a, 4b, 4c, 4d, 4e, 4f: show carrier modules in different embodiments; and
- Fig. 5: shows a method according to an embodiment.

### Detailed description of the drawing

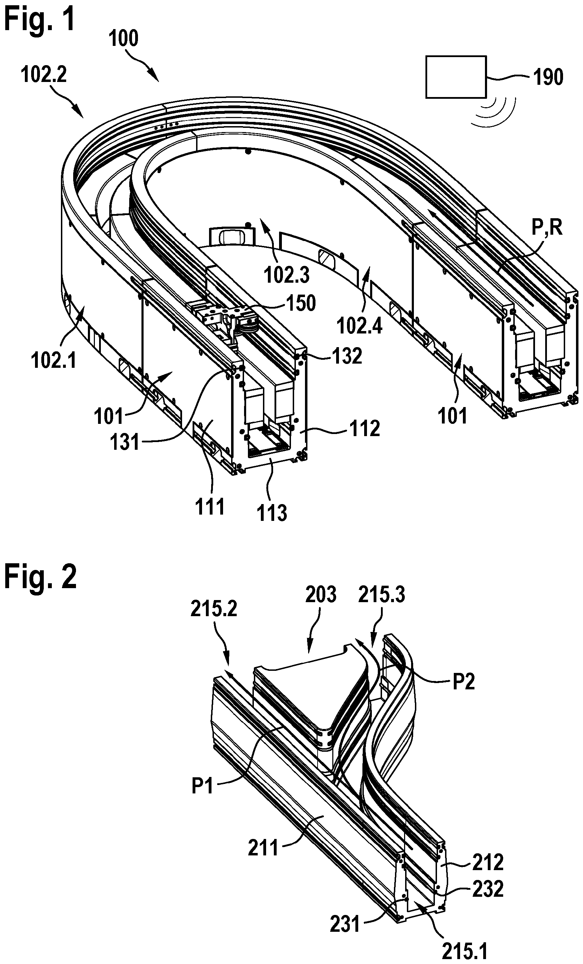

Fig. 1 schematically illustrates a linear motor conveying system 100 in a perspective view. The linear motor conveying system 100 comprises, by means of example, several track modules. Depending on the needs of a particular application for the linear motor conveying system, different types and numbers of track modules can be provided and also connected to each other to provide a track system. Types of track modules are, for example, straight modules, curve modules and switch modules.

By means of example, two track modules 101 are straight modules, and four parts or segments 102.1, 102.2, 102.3, 102.4 form a curve module, i.e., the curve module can be a single track module having a single track component. The straight modules 101 are both identical, in the example shown in Fig. 1. It is noted, however, that straight modules can have a different length, where a length is to be seen in moving or conveying direction R along a conveying path P, indicated for a straight module 101 in Fig. 1.

The parts or segments 102.1, 102.2, 102.3, 102.4 indicate, by means of example, regions having different radii and/or curve shapes. It is noted that the curved track module in Fig. 1 is only shown schematically, in particular, with regard to the way it is built. A more detailed description follows with regard to the other Figs.

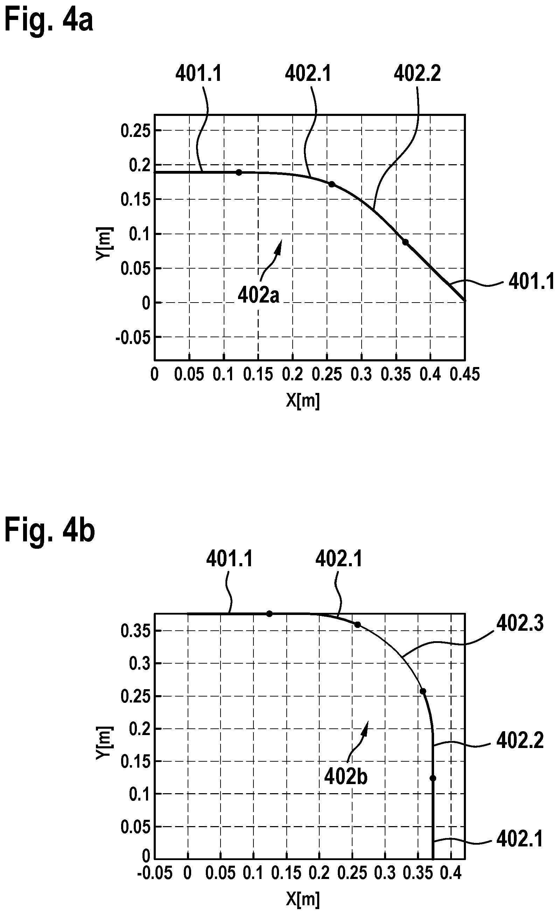

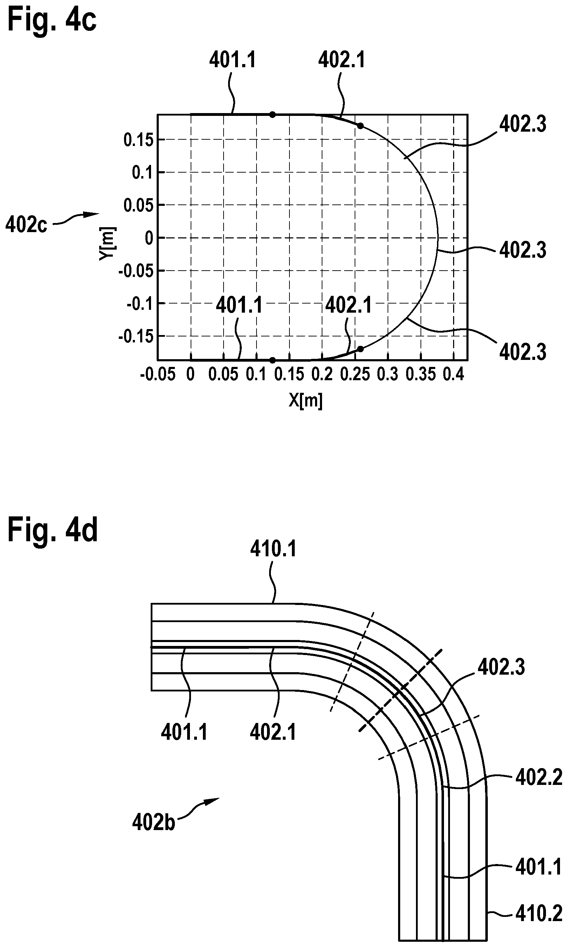

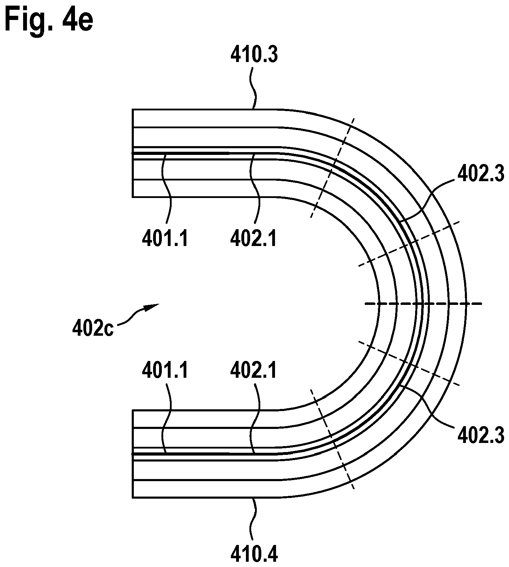

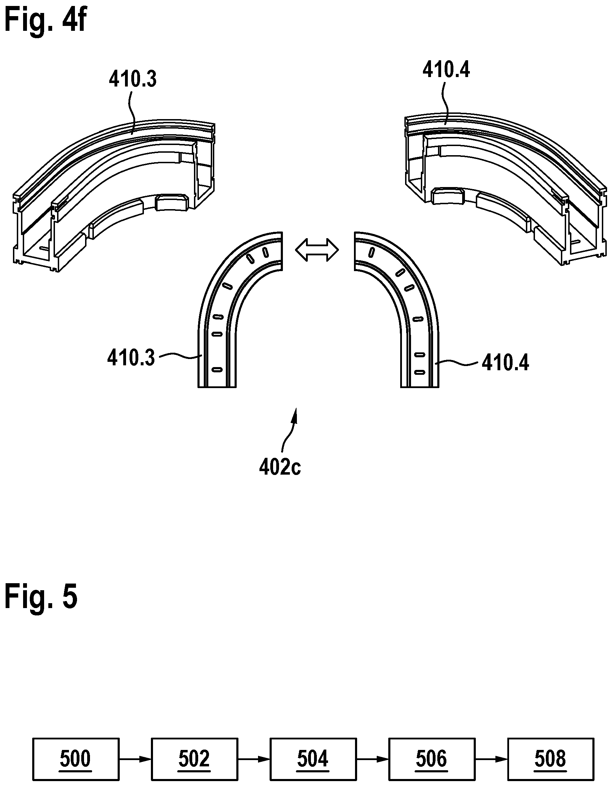

A more detailed explanation on how to obtain such curved track module formed from different parts or segments will be provided below with respect to Figs. 4 and following.

The straight module 101 at the lower left side in Fig. 1 will be described in more detail. The track module 101 comprises a track component 110, and at least two bearing surfaces 131, 132. By means of example, six bearing surfaces are shown in Fig. 1, while only two of them are indicated with a reference numeral. The bearing surfaces are formed by guide rails (rods).

Further, the track component 110 comprises a first side part 111, a second side part 112 and a bottom part 113, together forming a track module frame, wherein the first side part 111 and the second side part 113 are arranged opposite to each other.

At least a first one of the at least two bearing surfaces (here, e.g., bearing surface 131) is arranged at the first side part 111, and at least a second one of the at least two bearing surfaces (here, e.g., bearing surface 132) is arranged at the second side part 112, such that the at least one first bearing surface 131 and the at least one second bearing surface 132 face each other.

As mentioned, the bearing surfaces are formed by guide rails, which are support structures like rods, arranged in or inserted into recesses in the first side part 111 and the second side part 112.

It is noted that this way of how a track module is formed, does not only apply to straight module 101 but also to other types of modules like the curve modules with parts 102.1, 102.2, 102.3, 102.4.

Each of the straight modules and the curve modules shown in Fig. 1, have a conveying path, although only shown for one straight module 101, from a respective first to a respective second end. When the track modules are connected to each other, the individual tracking paths are also connected to from a cumulated conveying path, along which the carrier modules are guided and conveyed. Note that carrier modules can be moved or conveyed in both directions of a conveying path, either following the direction of the arrow indicating the conveying path P or reverse. As can be seen from Fig. 1, for example, a conveying path P also provides or defines conveying directions R, again the both directions mentioned.

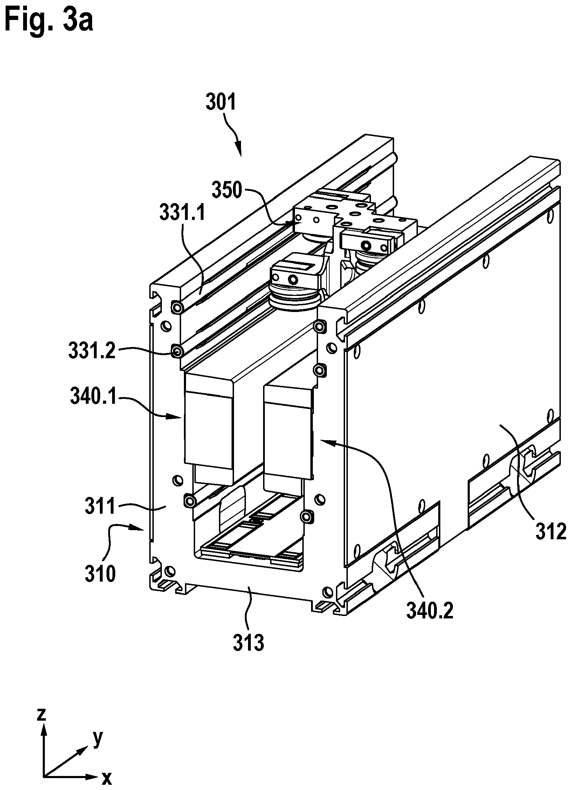

Further, the linear motor conveying system 100 comprises, by means of example, several carrier modules 150. The track module 101 is configured to receive such a carrier module 150 between the first side part 111 and the second side part 112, in particular, such that the at least one first bearing surface 131 matches with at least a first wheel of the carrier module 150, and that the at least one second bearing surface 132 matches with at least a second wheel of the carrier module 150. This is shown in Fig. 1 but will be illustrated and described in more detail later with respect to Figs. 3a to 3d.

Further, the linear motor conveying system 100 can comprise, in an embodiment, a controlling system 190 for controlling the linear motor conveying system 100 to move the carrier modules 150 within the track modules , i.e., in moving or conveying direction R, indicated in Fig. 1. It is noted that such conveying direction R is a straight line for straight modules, but it is a curved line for curved modules. For operating the linear motor conveying system 100, by means of the controlling system 190, electro-magnetic motor components, for example, at the track modules, have to be controlled.

Fig. 2 schematically illustrates a track module 203 according to an embodiment in a perspective view. Track module 203 is a switch module. Contrary to straight modules or curve modules, the carrier module is not restricted to move from one of two ends to the other of the two ends, i.e., enter the track module at a first end and leave the track module at a second end (having a single conveying path). Rather, the carrier module can enter the switch module at a first end 215.1 and leave the switch module at either a second end 215.3 or at a third end 215.3. The switch module 203 has two conveying paths P1 and P2, where conveying path P2 diverts from conveying path P1.

In order to control a linear motor conveying system comprising such switch module, to make the carrier module using conveying path P1, leaving at the second end 215.2 or using conveying path P2, leaving at the third end 215.3, electro-magnetic motor components, for example, at the track modules (not shown here), are to be controlled such that the carrier module is forced either to the second end 215.2 or to the third end 215.3. If the carrier module enters the switch module at the second end 215.2 or at the third end 215.3, in both cases, the carrier module will leave the switch module 203 at the first end 215.3. In other words, both conveying paths P1, P2 are merged.

Similar to the straight modules and curve modules shown in Fig. 1, the switch module 203 comprises a track component 210 for a conveying path, e.g., P1. The switch module 203 further comprises at least two bearing surfaces 231, 232 (formed by guide rails). By means of example, six bearing surfaces are shown in Fig. 2, while only two of them are indicated with a reference numeral.

Further, the track component 210 comprises, along the conveying path P1, a first side part 211, a second side part 212 and a bottom part 213, wherein the first side part 211 and the second side part 213 are arranged opposite to each other. It is noted that the second side part 211 is interrupted along the conveying path P1, due to a diversion of conveying path P2. Similar to the conveying path P1, the track component comprises, along the conveying path P2, a first side part, a second side part and a bottom part (not indicated with reference numerals here).

Switch modules like the one shown in Fig. 2, can be used together with straight modules and curve modules like the one shown in Fig. 1, in order to create a (complex) track system and linear motor conveying system.

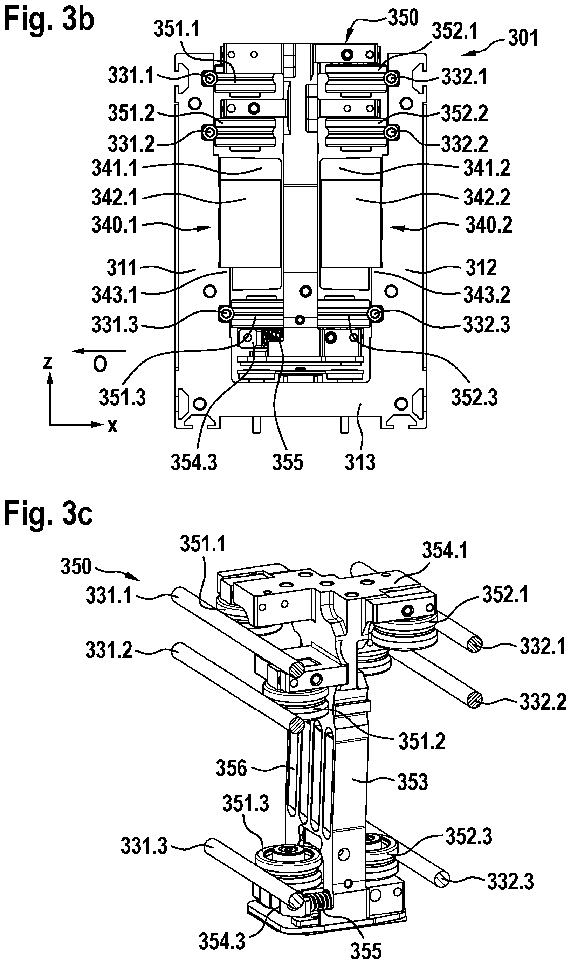

Fig. 3a illustrates a track module 301 and a carrier module 350 in a perspective view. Fig. 3b illustrates the track module 301 and the carrier module 350 of Fig. 3a in a cross section in the x-y-plane. Fig. 3c illustrates the carrier module 350 of Fig. 3a in a perspective view but without most parts of the track module. Figs. 3a, 3b and 3c shall be described together in the following. It is noted that the axes could also be defined different, e.g., with the conveying direction in the x-direction.

By means of example and for explanation of the basic structure and composition of a track module, track module 301 is a straight module. Track module 301 can correspond to track module 101 of Fig. 1, however, showing additional components. The following explanations apply also to other types of track modules.

The track module 301 comprises a track component 310, and, by means of example, six bearing surfaces 331.1, 331.2, 331.3, 332.1, 332.2, 332.3 formed by guide rails (rods). Further, the track component 301 comprises, along a conveying path, a first side part 311, a second side part 312 and a bottom part 313, wherein the first side part 311 and the second side part 313 are arranged opposite to each other. The conveying path is not denoted in Fig. 3a, but extends along the y-direction and can be similar or equal to conveying path P shown in Fig. 1.

Three first guide rails (here, e.g., guide rails 331.1, 331.2, 331.3) are arranged the first side part 311, and three second guide rails (here, e.g., guide rails 332.1, 332.2, 332.3) are arranged at the second side part 312, such that the at first guide rails 331.1, 331.2, 331.3 and the second guide rails 332.1, 332.2, 332.3 face each other, i.e., are oriented towards each other. In other words, all of the guide rails are provided at an inner side of the respective first and second side parts, where the conveying path is formed.

By means of example, the guide rails, i.e. support structures like rods, are arranged in or inserted into recesses in the first side part 311 and the second side part 312.

In an embodiment, the track 301 further comprises two electro-magnetic motor components a first electro-magnetic motor component 340.1 and a second electro-magnetic motor component 340.2. The first electro-magnetic motor component 340.1 and the second electro-magnetic motor component 340.2 extend along the conveying path (here: in y-direction). The first electro-magnetic motor component 340.1 is arranged at the first side part 311, and the second electro-magnetic motor component 340.2 is arranged at the second side part 312, such that the first electro-magnetic motor component 340.1 and the second electro-magnetic motor 340.2 component face each other.

The two electro-magnetic motor components together form a motor (or a motor and/sensor) unit.

In an embodiment, the first electro-magnetic motor component 340.1 comprises one or more electric coils 341.1 (actually covered by epoxy in this Fig); a number of the electric coils can depend on the way how the coils are manufactured. Further, the first electro-magnetic motor component 340.1 can comprise one or more magnetic or ferromagnetic cores or a structured magnetic core 342.1, e.g., made of iron. Such magnetic or ferromagnetic core increases the magnetic forces produced by the electric coils. Further, the first electro-magnetic motor component 340.1 can comprise a holding or fixing structure 343.1 (only schematically illustrated) for fixing the coils and magnetic core to the first side part 311. The first electro-magnetic motor component 340.1 can be fixed to the first side part 311 by means of gluing and/or screwing, for example.

Similarly, the second electro-magnetic motor component 340.2 comprises one or more electric coils 341.2; a number of the electric coils can depend on the way how the coils are manufactured. Further, the second electro-magnetic motor component 340.2 can comprise one or more magnetic or ferromagnetic cores or a structured magnetic core 342.2, e.g., made of iron. Such magnetic or ferromagnetic core increases the magnetic forces produced by the electric coils. Further, the second electro-magnetic motor component 340.2 can comprise a holding or fixing structure 343.2 for fixing the coils and magnetic core to the second side part 312. The second electro-magnetic motor component 340.2 can be fixed to the second side part 312 by means of gluing and/or screwing, for example.

In an embodiment, the bottom part 313 is configured to be placed on and/or to be oriented towards and/or to be mounted to a ground surface. Such ground surface would be below the bottom part 313, seen in z-direction in Figs. 3a, 3b. In an embodiment, the bottom part 313 comprises one or more holes facing the ground surface. This allows for cleaning out small piece of debris. Also, any fluid, e.g., water, is allowed to drain when used in an IP65 type of environment, for example.

The track module 301 is configured to receive a carrier module 350 between the first side part 311 and the second side part 312 and is, preferably, configured such that the first bearing surfaces 332.1, 332.2, 332.3 match with respective first wheels of the carrier module 350, and that the second bearing surfaces 332.1, 332.2, 332.3 match with respective second wheels of the carrier module 350.

While Figs. 3a, 3b shown the carrier module 350 being received in the track module 301, Fig. 3c shows the carrier module 350 as such. In addition, Fig. 3c shows the six bearing surfaces (guide rails) 331.1, 331.2, 331.3, 332.1, 332.2, 332.3. The carrier module 350 comprises a carrier component 353 and, by means of example, six wheels, three first wheels 351.1, 351.2, 351.3, and three second wheels 352.1, 352.2, 352.3 (note that wheel 352.2 is not visible in Fig. 3c). The carrier module 350 is configured to be received between the first side part 311 and the second side part 312 of the track module 301.

By means of example, three first wheels 351.1, 351.2, 351.3 and the three second wheels 352.1, 352.2, 352.3 are arranged at the carrier component 353 opposite to each other, such that three first wheels 351.1, 351.2, 351.3 face the first side component 311 and the three second wheels 352.1, 352.2, 352.3 face the second side component 312, when received in the track module 301. This can be seen in Figs. 3a, 3b. Each of the wheels 351.1, 351.2, 351.3, 352.1, 352.2, 352.3 matches with a respective one of the six guide rails 331.1, 331.2, 331.3, 332.1, 332.2, 332.3. This can be seen in Fig. 3c. With respect to the guide rail and the wheels, matching means that a wheel can be guided by and roll on a respective guide rail. The wheels, for example, can comprise a groove matching with the bearing surface (or guide rail).

Such groove, in connection with the rod-shape of the guide rails, results in that the wheels are configured such that they are not movable with respect to a respective guide rails at the respective first side part or second side part of said track module, along a height direction (here: along z-direction) and when in contact with the respective bearing surface. This can clearly be seen in Fig. 3c.

In an embodiment, the carrier module 350 further comprises two counterpart electro-magnetic motor components, a first counterpart electro-magnetic motor component 356 (shown in Fig. 3c) and a second counterpart electro-magnetic motor component (not visible in Fig. 3c). Each of such counterpart electro-magnetic motor component can comprise one or more permanent magnets, for example. The first counterpart electro-magnetic motor component 356 and the second counterpart electro-magnetic motor component 356 are arranged at the carrier component 353 opposite to each other, such that the first counterpart electro-magnetic motor component 356 faces the first electro-magnetic motor component 340.1 of the track module 301 and that the second counterpart electro-magnetic motor component faces the second electro-magnetic motor component 340.2 of the track module 301, when received in the track module 301. This can be seen in Fig. 3a.

The first counterpart electro-magnetic motor component 356 matches with the first electro-magnetic motor component 340.1, i.e., these two components electro-magnetically interact with each other in order to from a linear electro-magnetic motor. This also, typically, requires an air gap of appropriate size between these two components. Similarly, the second counterpart electro-magnetic motor component matches with the second electro-magnetic motor component 340.2, i.e., these two components electro-magnetically interact with each other in order to from a linear electro-magnetic motor. This also, typically, requires an air gap of appropriate size between these two components. Thus, the track module 301 allows receiving a state of levitation of the carrier module 350 between the two side parts of the track module 301 (only schematically illustrated).

As can be seen Figs. 3b, 3c, the three first guide rails 331.1, 331.2, 331.3 are arranged one above the other, seen in the z-direction (which direction is orthogonal to the conveying direction, and is a height direction here). This holds also true for the corresponding second guide rails. Similarly, as can be seen Figs. 3b, 3c, the three first wheels 351.1, 351.2, 351.3 are arranged one above the other, seen in the z-direction (which direction is orthogonal to the conveying direction). This holds also true for the corresponding second wheels.

Further, by means of example, the carrier module 350 is configured to push the lower first wheel 351.3, in an outward direction O, towards the respective first side component 311, and away from the corresponding lower second wheel 352.3 that is arranged opposite. By means of example, carrier module 350 further comprises a spring means, e.g., a compression spring 355 (see Fig. 3b). The compression spring 355 is arranged at the carrier component 353 such as to provide a pre-tension force to the lower first wheel 351.3, a pre-tensioned wheel, via a wheel support means 354.3.

Figs. 4a to 4f schematically illustrate track modules or parts thereof in different embodiments. As mentioned, a track module is manufactured of at least two track frame segments and at least two motor and/or sensor units. In Figs. 4a to 4c, motor and/or sensor unit segments of different track modules are shown.

Fig. 4a illustrates a track module 402a, comprising a straight motor and/or sensor unit segment 401.1, a curved motor and/or sensor unit segment 402.1 having an angle of 22,5° and a non-constant radius, a curved motor and/or sensor unit segment 402.2 having an angle of - 22,5° and a non-constant radius, and another straight motor and/or sensor unit segment 401.1. In this way, in particular by the two curved motor and/or sensor unit segments, a curved track module of in total 45° can be obtained. It is noted that the straight motor and/or sensor unit segments can also be of different lengths, depending on the requirements.

Fig. 4b illustrates a track module 402b, comprising a straight motor and/or sensor unit segment 401.1, a curved motor and/or sensor unit segment 402.1 having an angle of 22,5° and a non-constant radius, a curved motor and/or sensor unit segment 402.3 having an angle of 45° and a constant radius, a curved motor and/or sensor unit segment 402.2 having an angle of -22,5° and af non-constant radius, and another straight motor and/or sensor unit segment 401.1. In this way, in particular by the three curved motor and/or sensor unit segments, a curved track module of in total 90° can be obtained. It is noted that the straight motor and/or sensor unit segments can also be of different lengths, depending on the requirements.

Fig. 4c illustrates a track module 402c, comprising a straight motor and/or sensor unit segment 401.1, a curved motor and/or sensor unit segment 402.1 having an angle of 22,5° and a non-constant radius, three curved motor and/or sensor unit segments 402.3 having an angle of 45° and a constant radius, a curved motor and/or sensor unit segment 402.2 having an angle of -22,5° and a non-constant radius, and another straight motor and/or sensor unit segment 401.1. In this way, in particular by the five curved motor and/or sensor unit segments, a curved track module of in total 180° can be obtained. It is noted that the straight motor and/or sensor unit segments can also be of different lengths, depending on the requirements.

These three exemplary embodiments show that using a set of curved and/or straight motor and/or sensor unit segments allows manufacturing track modules, in particular of curved shape or geometry, having different angles. Another example is a curved track module of in total 135°, for which only two instead of three curved motor and/or sensor unit segments 402.3 like in Fig. 4c could be used.

A reason why the curved motor and/or sensor unit segment 402.1, 402.2 having an angle of 22,5° or -22,5° and a non-constant radius are used, is in particular that this allows the carrier module to better or smoother entering the curve.

Fig. 4d again illustrates the track module 402b of Fig. 4b, however, not only showing the motor and/or sensor unit segments, but also, by means of example, two track frame segments, a track frame segment 410.1 and a track frame segment 410.2. The track frame segment 410.1 has an angle of 45°, including a straight part and a non-constant radius part. Similarly, this holds true for track frame segment 410.2.

Fig. 4e again illustrates the track module 402c of Fig. 4c, however, not only showing the motor and/or sensor unit segments, but also, by means of example, two track frame segments, a track frame segment 410.3 and a track frame segment 410.3. The track frame segment 410.3 has an angle of 90°, including a straight part, a non-constant radius part, and a constant radius part. Similarly, this holds true for track frame segment 410.4.

For both track modules 402b, 402c shown in Figs. 4d, 4e, the track frame segments and the motor and/or sensor unit segments are configured such that in the respective track module, lengths and/or curvatures of the track frame segments and the motor and/or sensor unit segments do not correspond to each other. A connection location between two motor and/or sensor unit segments is located within a part of a track frame segment, and a motor and/or sensor unit segment passes a connection location of two track frame segments.

It is noted that this way of how track frame modules are configured is only an example; it could also be different, i.e., connection locations of motor and/or sensor unit segments and track frame segments could correspond to each other. In the case of Fig. 4e, for example, this could result in more track frame segments and/or in track frame segments being not symmetrical to each other. Also, additional and/or other types of track frame segments could be used, e.g., of similar or same lengths and curvatures as the motor and/or sensor unit segments. Also, separate straight track frame segments could be provided.

Fig. 4f again illustrates the track module 402c of Figs. 4c and 4e, however, only the track frame segments 410.3, 410.4 in separated situation and once in top view and once in perspective view. It is noted that the track module 402c is also similar to the curved track module shown in Fig. 1.

Fig. 5 illustrates a method according to an embodiment. In step 500, for a given geometry of the track module, at least two track frame segments, at least two motor and/or sensor unit segments, and guide rails are provided. In the example of the track module 402c (see Figs., 4c, 4e, 4d), the two track frame segments 410.3, 410.4, two straight motor and/or sensor unit segments 401.1, a curved motor and/or sensor unit segment 402.1, three curved motor and/or sensor unit segments 402.3, and a curved motor and/or sensor unit segment 402.2 are provided. Guide rails are provided according to needs. It is noted that the guide rails will have a length of the entire track module at the respective side.

In a step 502, the at least two track frame segments are combined with each other, to form a track module frame, like illustrated in Fig. 4f. In a step 504, in the track module frame, grooves for the guide rails are provided, e.g., by milling. In a step 506, the guide rails are inserted into the grooves. In a step 508, motor and/or sensor unit segments are mounted into the track module frame, to form the track module.

## Claims

1. A method for manufacturing a track module (402a, 402b, 402c) for a linear motor conveying system, comprising:
Providing (500), for a given geometry of the track module, at least two track frame segments (410.1, 410.2, 410.3, 410.4), at least two motor and/or sensor unit segments (401.1, 402.1, 402.2, 402.3), and guide rails (131, 132);
Combining (502) the at least two track frame segments with each other, to form a track module frame;
Providing (504), in the track module frame, grooves for the guide rails;
Inserting (506) the guide rails into the grooves;
Mounting (508) the at least two motor and/or sensor unit segments into the track module frame, to form the track module.

2. The method of claim 1, wherein the guide rails have a length corresponding to a length of the track module at the respective side of the track module where the guide rails are to be inserted.

3. The method of claim 1 or 2, wherein the least two track frame segments are selected from a set of track frame segments such that the selected at least to track frame segments can be combined to form the given geometry of the track module, wherein the set of track frame segments comprises different types of track frame segments.

4. The method of claim 3, wherein the different types of track frame segments comprise at least two of the following types of track frame segments:
- Straight track frame segments of one or more different, pre-defined lengths,
- Curved track frame segments (410.1, 410.2, 410.3, 410.4), of one or more different, pre-defined curvatures.

5. The method of any one of the preceding claims, wherein the least two motor and/or sensor unit segments are selected from a set of motor and/or sensor unit segments such that the selected at least to motor and/or sensor unit segments can be combined to form the given geometry of the track module, wherein the set of motor and/or sensor unit segments comprises different types of motor and/or sensor unit segments.

6. The method of claim 5, wherein the different types of motor and/or sensor unit segments comprise at least two of the following types of motor and/or sensor unit segments:
- Straight motor and/or sensor unit segments (401.1) of one or more different, pre-defined lengths,
- Curved motor and/or sensor unit segments (402.1, 402.2, 402.3) of one or more different, pre-defined curvatures.

7. The method of claim 6, wherein the curved motor and/or sensor unit segments of more different, pre-defined curvatures comprise the following curvatures: a curvature having a constant radius, and a curvature having a non-constant radius.

8. The method of claim 3 or 4, and of claim 5 or 6, wherein the track frame segments and the motor and/or sensor unit segments are configured such that in a track module, lengths and/or curvatures of the track frame segments and the motor and/or sensor unit segments correspond to each other.

9. The method of claim 3 or 4, and of claim 5 or 6, wherein the track frame segments and the motor and/or sensor unit segments are configured such that in a track module, lengths and/or curvatures of the track frame segments and the motor and/or sensor unit segments do not correspond to each other.

10. A track module (402a, 402b, 402c) for a linear motor conveying system, comprising: at least two track frame segments, at least two motor and/or sensor unit segments, and guide rails,
wherein the at least two track frame segments are combined with each other, so as to form a track module frame;
wherein the guide rails are inserted into grooves provided in the track module frame; and
and wherein the at least two motor and/or sensor unit segments are mounted in the track module frame.

11. A track module (402a, 402b, 402c) for a linear motor conveying system, obtained by the method of any one of claims 1 to 9.

12. A linear motor conveying system (100), comprising one or more track modules of claim 10 or 11 and one or more carrier modules, said one or more carrier modules to be guided in the one or more track modules.
